# EUROPÄISCHE PATENTSCHRIFT

(11) **EP 1 849 550 B1**
(45) Veröffentlichungstag und Bekanntmachung des Hinweises auf die Patenterteilung: **02.03.2011**
(21) Anmeldenummer: 07004739.4
(22) Anmeldetag: 08.03.2007
(51) Int. Cl.: B23K 10/00, B23K 35/38, H05H 1/34

(54) **Verfahren zum Plasmaschneiden**
Method for cutting plasma
Procédé de coupe au plasma

(30) Priorität: 24.04.2006 DE 102006018858
(43) Veröffentlichungstag der Anmeldung: 31.10.2007
(73) Patentinhaber: Kjellberg Finsterwalde Plasma und Maschinen GmbH, 03238 Finsterwalde (DE)
(72) Erfinder: Laurisch, Frank, 03238 Finsterwalde (DE); Steudtner, Thomas, 03249 Sonnewalde (DE); Krink, Volker, 03238 Finsterwalde (DE)
(74) Vertreter: Manasse, Uwe

(56) Entgegenhaltungen:
- US-A- 5 653 895
- US-B1- 6 248 972
- US-B1- 6 268 583

## Beschreibung

Die vorliegende Erfindung betrifft ein Verfahren zum Plasmaschneiden gemäß dem Oberbegriff des Anspruchs 1 mittels eines Plasmaschneidbrenners unter Verwendung eines Plasmagases oder Plasmagasgemisches und eines Sekundärgasgemisches. Das Plasmagas wird auch als Primärgas bezeichnet, und das Sekundärgas wird auch als Schutzgas bezeichnet.

Ein solches Verfahren ist in US 6 268 583 beschrieben.

In dem europäischen Patent EP 0 790 756 B1 werden ein Verfahren und eine Vorrichtung zum Verbessern der Schnittgeschwindigkeit und Schnittqualität eines Plasmaschneidbrenners beschrieben. Der Plasmaschneidbrenner wird mit Plasmagas und Sekundärgas betrieben. Dabei wird als Sekundärgas ein Gemisch aus einem oxidierenden Gas, wie Sauerstoff oder Luft, und einem nichtoxidierenden Gas, wie Stickstoff oder Argon, verwendet, wobei der Anteil des oxidierenden Gases größer als 40% ist. Als Plasmagas wird Sauerstoff verwendet.

Nachteilig bei dem bekannten Verfahren ist insbesondere beim Schneiden un- und niedriglegierter Baustähle, daß es mit dem Einsatz von Stickstoff im Sekundärgas an der Oberfläche der Schnittflächen zu Aufnitrierungen und damit zur Aufhärtung kommt, die bei der Weiterbearbeitung zu Schwierigkeiten, zum Beispiel beim Schweißen zu Porenbildungen, führen kann.

Weiterhin wurde festgestellt, daß die an der Schnittfläche anhaftende Oxidschicht nur sehr schwer entfernbar ist. Dies ist auch für die Weiterverarbeitung von Bedeutung, wenn beispielsweise die Oxidschicht der Bauteile vor einer Farbbehandlung aufwendig entfernt werden muß.

Der Erfindung liegt somit die Aufgabe zugrunde, das Verfahren der eingangs genannten Art dahingehend weiterzuentwickeln, daß die obengenannten Nachteile beseitigt, zumindest aber verringert werden.

Erfindungsgemäß wird diese Aufgabe durch ein Verfahren gemäß Anspruch 1 gelöst.

Insbesondere kann dabei vorgesehen sein, daß ein erstes sauerstoffhaltiges Gas Sauerstoff ist und ein zweites sauerstoffhaltiges Gas Luft, COₓ oder NₓOₓ ist. COₓ kann Kohlenmonoxid oder Kohlendioxid sein und NₓOₓ ist irgendein Stickoxid.

Alternativ ist ein erstes sauerstoffhaltiges Gas Luft und ein zweites sauerstoffhaltiges Gas COₓ oder NₓOₓ.

Gemäß einer besonderen Ausführungsform der Erfindung besteht das Sekundärgasgemisch aus dem ersten sauerstoffhaltigen Gas und dem zweiten sauerstoffhaltigen Gas.

Vorteilhafterweise liegt der Volumenstromanteil des ersten sauerstoffhaltigen Gases im Bereich von 1 bis 99% des Sekundärgasgemisches.

Besonders bevorzugt liegt der Volumenstromanteil des ersten sauerstoffhaltigen Gases im Bereich von 50 bis 95% des Sekundärgasgemisches.

Noch bevorzugter beträgt der Volumenstromanteil des ersten sauerstoffhaltigen Gases 65% des Sekundärgasgemisches.

Günstigerweise liegt der Volumenstrom des Sekundärgasgemisches im Bereich von 200 bis 6000 1/h.

Besonders bevorzugt liegt der Volumenstrom des Sekundärgasgemisches im Bereich von 300 bis 3000 l/h.

Vorteilhafterweise ist das Plasmagas Sauerstoff.

Andererseits ist aber auch denkbar, daß das Plasmagas ein sauerstoffhaltiges Gas ist.

Wiederum alternativ kann das das Plasmagas ein reduzierendes Gas sein.

Zweckmäßigerweise ist das Plasmagas ein inertes Gas.

Günstigerweise ist das Plasmagasgemisch ein sauerstoffhaltiges Gasgemisch oder enthält es ein sauerstoffhaltiges Gas.

Andererseits ist auch denkbar, daß das Plasmagasgemisch ein reduzierendes Gasgemisch ist oder ein reduzierendes Gas enthält.

Schließlich kann das Plasmagasgemisch ein inertes Gasgemisch sein oder ein inertes Gas enthalten.

Der Erfindung liegt die überraschende Erkenntnis zugrunde, daß durch das Zusammensetzen des Sekundärgasgemisches aus mindestens zwei sauerstoffhaltigen Gasen die Schnittqualität insgesamt verbessert werden kann. Dies zeigt sich unter anderem in der Verringerung der Rauhigkeit, der Erhöhung der Schneidgeschwindigkeit und der Reduzierung von Aufhärtung und Gefügeeinflußzone.

Weitere Merkmale und Vorteile der Erfindung ergeben sich aus den Ansprüchen und der nachstehenden Beschreibung, in der ein Ausführungsbeispiel anhand einer einzigen schematischen Zeichnung im einzelnen erläutert ist.

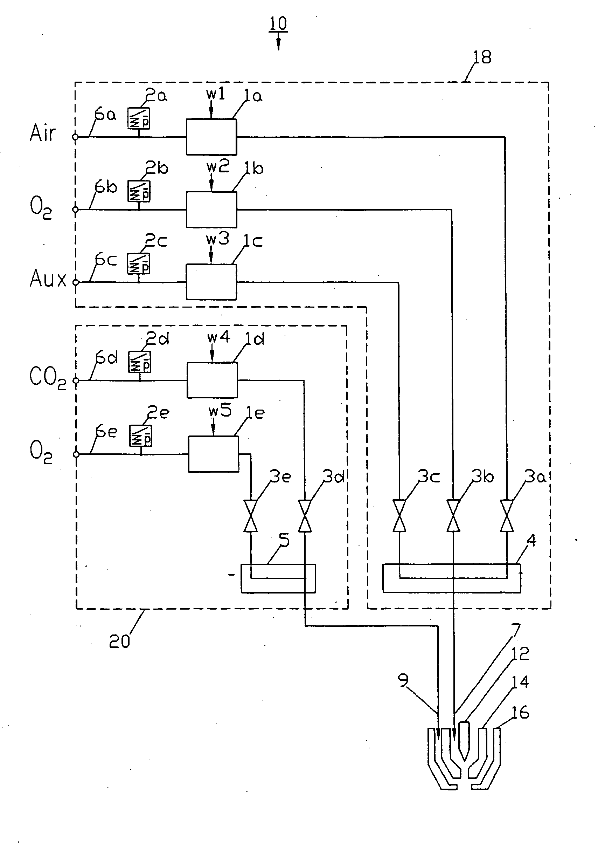

Die einzige Figur zeigt schematisch eine Anordnung zur Versorgung eines als Plasmaschneidbrenner ausgeführten Plasmabrenners mit einem Plasmagasgemisch und Sekundärgasgemisch zur Durchführung eines Verfahrens gemäß einer besonderen Ausführungsform der Erfindung. Die Anordnung 10 zur Versorgung eines als Plasmaschneidbrenners ausgeführten Plasmabrenners, von dem nur eine Elektrode 12, eine Plasmabrennerdüse 14 und eine Sekundärgasdüse 16 gezeigt sind und der zum Schneiden von un- und niedriglegierten Stählen dient, umfaßt eine Einrichtung 18 zur Zuführung eines Plasmagasgemisches oder Plasmagases, die für jedes vorgesehene Gas, nämlich Luft (Air), Sauerstoff (O₂) und ein beliebiges anderes Gas (Aux) eine Einzelgasquelle (nicht gezeigt) aufweist, die über eine jeweilige Schlauchleitung 6a, 6b, 6c mit einer Plasmagasmisch- oder - sammeleinrichtung 4 verbunden sind. Die Plasmagasmisch- oder -sammeleinrichtung 4 steht über einen Plasmagasschlauch 7 mit einer der Plasmabrennerdüse 14 in Verbindung. Weiterhin umfaßt die Anordnung 10 eine Einrichtung 20 zur Zuführung eines Sekundärgasgemisches. Besagte Einrichtung 20 umfaßt für jedes vorgesehene Gas, nämlich Kohlendioxid (CO₂) und Sauerstoff (O₂) eine Einzelgasquelle (nicht gezeigt), die über jeweilige Schlauchleitungen 6d und 6e mit einer Sekundärgasgemisch- oder - sammeleinrichtung 5 in Verbindung stehen, die wiederum über einen Sekundärgasschlauch 9 mit einer Sekundärgasdüse 16 in Verbindung steht.

In jeder Schlauchleitung 6a, 6b, 6c sowie 6d und 6e sind jeweils ein Druckschalter 2a, 2b, 2c, 2d bzw. 2e, eine Volumenstromregeleinrichtung 1a, 1b, 1c, 1d bzw. 1e, denen jeweils ein Volumenstromsollwert w1, w2, w3, w4 bzw. w5 zugeführt wird, und ein Magnetventil 3a, 3b, 3c, 3d bzw. 3e in Reihe hintereinander vorgesehen.

Zu Beginn eines Plasmaschneidprozesses werden die Magnetventile 3a, 3d und 3e geöffnet und die entsprechenden Volumenströme der Einzelgase und damit auch der Gesamtvolumenstrom des Sekundärgasgemisches sowie das Mischungsverhältnis der sauerstoffhaltigen Gase eingestellt. Wenn das Plasmagas und das Sekundärgasgemisch stabil strömen, kann zunächst der Pilotlichtbogen und danach der Hauptlichtbogen gezündet und das Werkstück geschnitten werden. Bei Ausbildung des Hauptlichbogens wird das Magnetventil 3a geschlossen, zeitgleich das Magnetventil 3b geöffnet. Durch die Volumenstromregelung des Sekundärgases wird das Mischungsverhältnis über den gesamten Schneidprozeß konstant gehalten und können optimierte Schnittparameter erzielt werden.

Schneidtechnische Versuche für Baustahl haben die besten Ergebnisse bei Verwendung eines Sekundärgasgemisches aus Sauerstoff mit anderen sauerstoffhaltigen Gasen sowie eines Plasmagases aus Sauerstoff ergeben. Untersuchungen zeigten sogar, daß das Zumischen zum Beispiel von Kohlendioxid zu Sauerstoff zur Erzeugung eines Sekundärgasgemisches die Schnittqualität insgesamt weiter verbesserte.

Bei einem Baustahl PAS 700 mit einer Dicke von 4mm wurden bei einem Strom von 35 A folgende Werte ermittelt:

**Sekundärgasgemisch aus Sauerstoff und Stickstoff:**

| | |
|---|---|
| Schneidgeschwindigkeit: | 0,9 m/min |
| Rautiefe: | 5µm |
| Aufhärtung: | 420 HV (Grundwerkstoff 310 HV) |
| Aufhärtungszone: | 400 µm |

**Sauerstoff-Kohlendioxid-Gemisch als Sekundärgas:**

| | |
|---|---|
| Schneidgeschwindigkeit: | 0,9 m/min |
| Rautiefe: | 2,5µm |
| Aufhärtung: | keine Aufhärtung nachweisbar |

Die gleichen Werte wurden auch bei Erhöhung der Schneidgeschwindigkeit mit dem Sekundärgasgemisch aus Sauerstoff und Kohlendioxid auf 1,2 m/min erreicht. Dadurch vergrößert sich das Prozeßfenster, das heißt, daß Schwankungen der Schneidparameter (hier im Beispiel die Schneidgeschwindigkeit) einen geringeren Einfluß auf die Schnittqualität haben. Außerdem ließ sich die für das Schneiden von Baustahl mit dem Sauerstoff als Plasmagas typische Oxidschicht bei Verwendung des Sekundärgasgemisches aus Sauerstoff und Kohledioxid wesentlich leichter entfernen als bei Verwendung eines Sekundärgasgemisches aus Sauerstoff und Stickstoff. Leichtes Reiben mit einem Fingernagel war dafür schon ausreichend, während sonst ein Werkzeug zu Hilfe genommen werden mußte.

Das verwendete Sekundärgasgemisch hatte dabei einen Gesamtvolumenstrom von 360 l/h, wobei der Anteil von Kohlendioxid 120 l/h und der Anteil von Sauerstoff 240 l/h betrug. Der Gesamtvolumenstrom kann auch wesentlich größere Werte, zum Beispiel beim Unterwasser-Plasmaschneiden annehmen. Hier sind Werte bis zu 8000 l/h üblich. Der jeweilige Anteil der sauerstoffhaltigen Gase kann in großen Bereichen (1 - 99%) variiert werden.

Die in der vorliegenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zum Plasmaschneiden mittels eines Plasmaschneidbrenners unter Verwendung eines Plasmagases oder Plasmagasgemisches und eines Sekundärgasgemisches, **dadurch gekennzeichnet, dass** das Sekundärgasgemisch aus mindestens zwei sauerstoffhaltigen Gasen besteht, wobei durch das Zusammensetzen des Sekundärgasgemisches, ein erstes der sauerstoffhaltigen Gase Luft ist und ein zweites der sauerstofflialtigen Gase Sauerstoff, COₓ oder NₓOₓ ist.

2. Verfahren nach Anspruch 1, **dadurch gekennzeichnet, dass** das Sekundärgasgemisch aus dem ersten sauerstoffhaltigen Gas und dem zweiten sauerstoffhaltigen Gas besteht.

3. Verfahren nach Anspruch 2, **dadurch gekennzeichnet, dass** der Volumenstromanteil des ersten sauerstoffhaltigen Gases im Bereich von 1 bis 99% des Sekundärgasgemisches liegt.

4. Verfahren nach Anspruch 3, **dadurch gekennzeichnet, dass** der Volumenstromanteil des ersten oder zweiten sauerstoffhaltigen Gases im Bereich von 50 bis 95% des Sekundärgasgemisches liegt.

5. Verfahren nach Anspruch 4, **dadurch gekennzeichnet, dass** der Volumenstromanteil des ersten oder zweiten sauerstoffhaltigen Gases 65% des Sekundärgasgemisches beträgt.

6. Verfahren nach einem der vorangehenden Ansprüche, **dadurch gekennzeichnet, dass** der Volumenstrom des Sekundärgasgemisches im Bereich von 200 bis 6000 1/h liegt.

7. Verfahren nach Anspruch 5, **dadurch gekennzeichnet, dass** der Volumenstrom des Sekundärgasgemisches im Bereich von 300 bis 3000 1/h liegt.

8. Verfahren nach einem der vorangehenden Ansprüche, **dadurch gekennzeichnet, dass** das Plasmagas Sauerstoff ist.

9. Verfahren nach einem der Ansprüche 1 bis 7, **dadurch gekennzeichnet, dass** das Plasmagas ein sauerstoffhaltiges Gas ist.

10. Verfahren nach einem der Ansprüche 1 bis 7, **dadurch gekennzeichnet, dass** das Plasmagas ein reduzierendes Gas ist.

11. Verfahren nach einem der Ansprüche 1 bis 7, **dadurch gekennzeichnet, dass** das Plasmagas ein inertes Gas ist.

12. Verfahren nach einem der Ansprüche 1 bis 7, **dadurch gekennzeichnet, dass** das Plasmagasgemisch ein sauerstoffhaltiges Gasgemisch ist oder ein sauerstoffhaltiges Gas enthält.

13. Verfahren nach einem der Ansprüche 1 bis 7, **dadurch gekennzeichnet, dass** das Plasmagasgemisch ein reduzierendes Gasgemisch ist oder ein reduzierendes Gas enthält.

14. Verfahren nach einem der Ansprüche 1 bis 7, **dadurch gekennzeichnet, dass** das Plasmagasgemisch ein inertes Gasgemisch ist oder ein inertes Gas enthält.

## Claims

1. Procedure for plasma cutting with a plasma cutting torch, using plasma gas or a plasma gas mixture and a secondary mixture, **characterised by** the secondary gas mixture consisting of at least two oxygenic gases, whereby the first of the oxygenic gases of the secondary gas mixture is air and the second of the oxygenic gases is COₓ or NₓOₓ.

2. Procedure according to Claim 1, **characterised by** the secondary gas mixture consisting of the first oxygenic gas and the second oxygenic gas.

3. Procedure according to Claim 2, **characterised by** the volumetric flow component of the first oxygenic gas being in the range of 1 to 99% of the secondary gas mixture.

4. Procedure according to Claim 3, **characterised by** the volumetric flow component of the first or second oxygenic gas being in the range of 50 to 95% of the secondary gas mixture.

5. Procedure according to Claim 4, **characterised by** the volumetric flow component of the first or second oxygenic gas amounting to 65% of the secondary gas mixture.

6. Procedure according to one of the preceding claims, **characterised by** the volumetric flow component of the first or second oxygenic gas being in the range of 200 to 6,000 l/h.

7. Procedure according to Claim 5, **characterised by** the volumetric flow of the secondary gas mixture being in the range of 300 to 3000 l/h.

8. Procedure according to one of the preceding claims, **characterised by** the plasma gas being oxygen.

9. Procedure according to one of the Claims 1 to 7, **characterised by** the plasma gas being an oxygenic gas.

10. Procedure according to one of the Claims 1 to 7, **characterised by** the plasma gas being a reducing gas.

11. Procedure according to one of the Claims 1 to 7, **characterised by** the plasma gas being an inert gas.

12. Procedure according to one of the Claims 1 to 7, **characterised by** the plasma gas mixture being an oxygenic gas mixture or containing an oxygenic gas.

13. Procedure according to one of the Claims 1 to 7, **characterised by** the plasma gas mixture being a reducing gas mixture or containing a reducing gas.

14. Procedure according to one of the Claims 1 to 7, **characterised by** the plasma gas mixture being an inert gas mixture or containing an inert gas.

## Revendications

1. Procédé de découpe au plasma, au moyen d'un brûleur de découpe au plasma, avec utilisation d'un gaz plasma ou d'un mélange de gaz plasma et d'un mélange de gaz secondaires, **caractérisé en ce que** le mélange de gaz secondaires est composé d'au moins deux gaz contenant de l'oxygène, où, du fait de la composition du mélange de gaz secondaires, un premier des gaz contenant de l'oxygène est l'air et un deuxième des gaz contenant de l'oxygène est l'oxygène, COₓ ou NₓOₓ.

2. Procédé selon la revendication 1, **caractérisé en ce que** le mélange de gaz secondaires est composé du premier gaz contenant de l'oxygène et du deuxième gaz contenant de l'oxygène.

3. Procédé selon la revendication 2, **caractérisé en ce que** la proportion de débit volume du premier gaz contenant de l'oxygène est dans la fourchette allant de 1 à 99 % du mélange de gaz secondaires.

4. Procédé selon la revendication 3, **caractérisé en ce que** la proportion de débit volume du premier ou du deuxième gaz contenant de l'oxygène est dans la fourchette allant de 50 à 95 % du mélange de gaz secondaires.

5. Procédé selon la revendication 4, **caractérisé en ce que** la proportion de débit volume du premier ou du deuxième gaz contenant de l'oxygène est de 65 % du mélange de gaz secondaires.

6. Procédé selon l'une des revendications précédentes, **caractérisé en ce** le débit volume du mélange de gaz secondaires est dans la fourchette allant de 200 à 6000 l/h du mélange de gaz secondaires.

7. Procédé selon la revendication 5, **caractérisé en ce que** le débit volume du mélange de gaz secondaires est dans la fourchette allant de 300 à 3000 l/h du mélange de gaz secondaires.

8. Procédé selon l'une des revendications précédentes, **caractérisé en ce** le gaz plasma est de l'oxygène.

9. Procédé selon l'une des revendications 1 à 7, **caractérisé en ce** le gaz plasma est un gaz contenant de l'oxygène.

10. Procédé selon l'une des revendications 1 à 7, **caractérisé en ce** le gaz plasma est un gaz réducteur.

11. Procédé selon l'une des revendications 1 à 7, **caractérisé en ce** le gaz plasma est un gaz inerte.

12. Procédé selon l'une des revendications 1 à 7, **caractérisé en ce que** le mélange de gaz plasma contient un mélange de gaz contenant de l'oxygène ou un contenant de l'oxygène.

13. Procédé selon l'une des revendications 1 à 7, **caractérisé en ce que** le mélange de gaz plasma contient un mélange de gaz réducteur ou un gaz réducteur.

14. Procédé selon l'une des revendications 1 à 7, **caractérisé en ce que** le mélange de gaz plasma contient un mélange de gaz inerte ou un gaz inerte.
